# EUROPÄISCHE PATENTSCHRIFT

(11) **EP 2 340 136 B1**
(45) Veröffentlichungstag und Bekanntmachung des Hinweises auf die Patenterteilung: **09.01.2013**
(21) Anmeldenummer: 09783356.0
(22) Anmeldetag: 24.09.2009
(51) Int. Cl.: B22C 1/06, B22C 3/00, B22C 9/00, B22C 9/04, B22C 13/08

(54) **VERFAHREN ZUR HERSTELLUNG EINER GUSSFORM ZUM VERGIESSEN VON METALLSCHMELZEN**
METHOD FOR PRODUCING A MOULD FOR CASTING METALLIC MELTS
PROCÉDÉ POUR PRODUIRE UN MOULE SERVANT À COULER DES MÉTAUX EN FUSION

(30) Priorität: 25.09.2008 DE 102008042375
(43) Veröffentlichungstag der Anmeldung: 06.07.2011
(73) Patentinhaber: Renkel, Manfred, 96231 Bad Staffelstein (DE)
(72) Erfinder: Renkel, Manfred, 96231 Bad Staffelstein (DE)
(74) Vertreter: Gassner, Wolfgang
(86) Internationale Anmeldenummer: PCT/EP2009/062360
(87) Internationale Veröffentlichungsnummer: WO 2010/034765

(56) Entgegenhaltungen:
- EP-A1- 0 093 212
- EP-A1- 0 252 862
- EP-B1- 1 645 348
- WO-A2-2005/039803
- US-A- 4 057 433
- BAUMEISTER G ET AL: "Microcasting of Al bronze and a gold base alloy improved by plaster-bonded investment" MICROSYSTEM TECHNOLOGIES ; MICRO AND NANOSYSTEMS INFORMATION STORAGE AND PROCESSING SYSTEMS, SPRINGER, BERLIN, DE LNKD- DOI:10.1007/S00542-006-0105-3, Bd. 12, Nr. 8, 21. Februar 2006 (2006-02-21), Seiten 773-777, XP019429600 ISSN: 1432-1858

## Beschreibung

Die Erfindung betrifft ein Verfahren zur Herstellung einer Gussform zum Vergießen von Metallschmelzen, insbesondere zum Vergießen von Titan, Titanlegierungen oder intermetallischen Titanaluminiden, nach dem Oberbegriff des Anspruchs 1.

Ein solches Verfahren ist aus der EP 1 645 348 B1 bekannt. Nach dem bekannten Verfahren ist vorgesehen, dass zur Unterstützung der Trocknung einer auf einem Formkern aufgebrachten Schlickerschicht IR-Strahlung eingesetzt wird. Damit kann die Trocknung der Schlickerschicht beschleunigt werden.

Bei derartigen Gussformen werden in der Regel eine Vielzahl von Schlicker- und Besandungsschichten nacheinander aufgebracht. Es ist dabei jeweils erforderlich, jede neu aufgebrachte Schichtabfolge aus Schlicker- und Besandungsschicht zu trocknen, bevor die nächste Schichtabfolge aufgebracht wird. Dabei verlängert sich die Trocknungsdauer mit zunehmender Anzahl der Schichtabfolgen. Die Herstellung einer Gussform mit mehreren Schichtabfolgen erfordert insgesamt einen hohen Zeitaufwand von mehr als 3 Stunden.

Aufgabe der Erfindung ist es, ein Verfahren anzugeben, mit dem der Zeitaufwand zur Herstellung von Gussformen zum Vergießen von Metallschmelzen weiter reduziert werden kann.

Diese Aufgabe wird durch die Merkmale des Anspruchs 1 gelöst. Zweckmäßige Ausgestaltungen ergeben sich aus den Merkmalen der Ansprüche 2 bis 28.

Nach Maßgabe der Erfindung ist vorgesehen, dass eine erste Trockenmasse zur Herstellung des ersten Schlickers ein hydraulisches Bindemittel enthält. Hydraulische Bindemittel binden unter Wasseraufnahme ab. Sie entziehen der Kontaktschicht also Wasser und verfestigen diese gleichzeitig. Durch das Vorsehen des hydraulischen Bindemittels wird die Festigkeit der Kontaktschicht erhöht. Infolgedessen kann die Gussform aus einer geringeren Anzahl an Schichtabfolgen aufgebaut werden. Damit kann insbesondere die Herstellung einer aus einer Mehrzahl von Schichtabfolgen aufgebauten Gussform erheblich beschleunigt werden.

Im Sinne der vorliegenden Erfindung wird unter einem "hydraulischen Bindemittel" ein Stoffgemisch verstanden, das mit Wasser hydratisiert. Die dabei gebildeten Hydratationsprodukte führen zu einer Verfestigung der im Schlicker enthaltenen festen Bestandteile.

Nach einer vorteilhaften Ausgestaltung enthält die erste Trockenmasse 1 bis 30 Gew.%, vorzugsweise 8 bis 17 Gew.%, besonders bevorzugt 9 bis 13 Gew.%, des hydraulischen Bindemittels. Bei dem hydraulischen Bindemittel handelt es sich zweckmäßigerweise um einen Calciumaluminatzement. Ein solches hydraulisches Bindemittel ist chemisch weitgehend inert. Unter Verwendung eines Calciumaluminatzements können Gussformen hergestellt werden, mit denen hochreaktive Metallschmelzen, insbesondere intermetallische Titanaluminidschmelzen, vergossen werden können. Dabei hat es sich als vorteilhaft erwiesen, dass in der ersten Trockenmasse 1 bis 15 Gew.% des hydraulischen Bindemittels enthalten sind.

Nach einer weiteren vorteilhaften Ausgestaltung weist ein Kornband des ersten Metalloxid-Pulvers einen Bereich von 0 bis 50 µm und vorteilhafterweise eine mittlere Korngröße (d₅₀) im Bereich von 8 bis 20 µm auf. Das zur Herstellung der ersten Besandungsschicht verwendete zweite Metalloxid-Pulver kann eine mittlere Korngröße im Bereich von 130 bis 200 µm aufweisen. Eine aus der Kontaktschicht und der ersten Besandungsschicht hergestellte Schichtabfolge wird anschließend u. a. mittels Infrarotlicht für eine vorgegebene Zeit getrocknet. Dabei trägt das erfindungsgemäß vorgesehene hydraulische Bindemittel zu einer verbesserten Verfestigung der Gussform bei.

Nach einer weiteren Ausgestaltung ist vorgesehen, dass das erste und/oder zweite Metalloxid-Pulver aus zumindest einem Metalloxid gebildet ist, welches aus der folgenden Gruppe ausgewählt ist: Y₂O₃, CeO, MgO, Al₂O₃. Dabei kann die erste Trockenmasse zweckmäßigerweise weniger als 95 Gew.%, vorzugsweise weniger als 90 Gew.%, an erstem Metalloxid-Pulver enthalten. Zweckmäßigerweise enthält die erste Trockenmasse 40 bis 70 Gew.% an erstem Metalloxid-Pulver.

Sofern als erstes Metalloxid-Pulver Y₂O₃ verwendet wird, kann eine ausgezeichnete Resistenz gegen hochreaktive Metallschmelzen, insbesondere intermetallische Titanaluminidschmelzen, erreicht werden. Eine solche Gussform eignet sich insbesondere zur Herstellung von Titanaluminid-Bauteilen. In diesem Fall enthält die erste Trockenmasse zweckmäßigerweise höchstens 15 Gew.% an hydraulischem Bindemittel. Die erste Trockenmasse ist zweckmäßigerweise - abgesehen von unvermeidbaren Verunreinigungen - frei von MgO. Damit kann eine besonders gute Resistenz gegenüber den vorgenannten hochreaktiven Metallschmelzen erreicht werden.

Nach einem weiteren Ausgestaltungsmerkmal wird eine die Schichtabfolge aus Kontakt- und erster Besandungsschicht oder die mehreren Schichtabfolgen umgebende Mantelschicht hergestellt. Die Mantelschicht kann als wesentlichen Bestandteil MgO enthalten. Eine zweite Trockenmasse zur Herstellung der Mantelschicht kann ferner ein hydraulisches Bindemittel, vorzugsweise Calciumaluminatzement, enthalten. Vorteilhafterweise enthält der Calciumaluminatzement 60 bis 80 Gew.% Al₂O₃, vorzugsweise etwa 70 Gew.% Al₂O₃. Eine zweite Trockenmasse enthält zweckmäßigerweise zumindest 40 Gew.% MgO, vorzugsweise 60 bis 80 Gew.%, sowie zumindest 20 Gew.% des hydraulischen Bindemittels. Ferner kann die zweite Trockenmasse zumindest 1 Gew.% eines oder mehrerer der folgenden Oxide enthalten: Fe₂O₃, SiO₂, CaO, Al₂O₃. Die Mantelschicht dient im Wesentlichen der mechanischen Stabilisierung der Schichtabfolge. Sie kann eine erheblich größere Schichtdicke aufweisen als die Schichtabfolge. Eine die vorgeschlagene Mantelschicht aufweisende Gussform eignet sich insbesondere zur Durchführung des Schleudergussverfahrens.

Als besonders zweckmäßig hat es sich erwiesen, vor der Herstellung der Mantelschicht auf die aus Kontakt- und erster Besandungsschicht gebildete Schichtabfolge eine aus einer Zwischen- und einer zweiten Besandungsschicht gebildete Zwischenschichtabfolge aufzubringen. Damit kann die Thermoschockbeständigkeit der Gussform verbessert werden.

Die Kontaktschicht wird zweckmäßigerweise im Spritzverfahren aufgebracht. Die Zwischenschicht kann ebenfalls im Spritzverfahren oder auch im Tauchverfahren aufgebracht werden. Durch das Aufbringen der Kontakt- und/oder Zwischenschicht im Spritzverfahren können die jeweiligen Schichten in einer besonders geringen Schichtstärke bei gleichzeitig verbesserter Oberflächenqualität aufgebracht werden. Damit kann weiter die Trocknung der jeweiligen Schichten beschleunigt werden.

Der zweite Schlicker kann als wesentlichen festen Bestandteil ein erstes MgO-Pulver enthalten. Ferner kann der zweite Schlicker ein hydraulisches Bindemittel, vorzugsweise einen Calciumaluminatzement, enthalten. Der Calciumaluminatzement kann wiederum 60 bis 80 Gew.% Al₂O₃, vorzugsweise etwa 70 Gew.% Al₂O₃ enthalten.

Eine dritte Trockenmasse zur Herstellung des zweiten Schlickers kann zumindest 50 Gew.% MgO, vorzugsweise 60 bis 70 Gew.%, und zumindest 20 Gew.% des hydraulischen Bindemittels enthalten. Die zweite Besandungsschicht wird zweckmäßigerweise durch Aufbringen des zweiten MgO-Pulvers auf die Zwischenschicht hergestellt.

Es können mehrere derartige Zwischenschichtabfolgen, die jeweils aus einer Zwischenschicht und einer zweiten Besandungsschicht gebildet sind, nacheinander auf die Schichtabfolge aus Kontakt- und erster Besandungsschicht aufgebracht werden. Es können auch mehrere Schichtabfolgen aus Kontakt- und erster Besandungsschicht vorgesehen sein. Die zweite Besandungsschicht wird zweckmäßigerweise durch Aufbringen eines zweiten MgO-Pulvers auf die Zwischenschicht hergestellt. Dabei kann das erste MgO-Pulver eine kleinere mittlere Korngröße als das zweite MgO-Pulver aufweisen.

Die vorgeschlagene Zwischenschichtabfolge trägt zu einer verbesserten Thermoschockbeständigkeit der Gussform bei. Indem auch die Zwischenschichten ein hydraulisches Bindemittel enthalten, können auch sie schnell und effizient, insbesondere im Tauchverfahren, hergestellt werden.

Im Hinblick auf die jeweilige Anwendung hat es sich auch als zweckmäßig erwiesen, dass die erste und/oder dritte Trockenmasse und/oder die Besandungsschicht/en zumindest 1 Gew.% eines der folgenden Oxide enthält/enthalten: CeO₂, La₂O₃, Gd₂O₃, Nd₂O₃, TiO₂. Auch der Zusatz anderer Oxide der seltenen Erden ist möglich.

Nach einer besonders vorteilhaften Ausgestaltung wird ein Feuchtigkeitsgehalt der Schicht- und/oder der Zwischenschichtabfolge nach deren Herstellung auf einen vorgegebenen Wert vermindert. Der vorgegebene Wert kann im Bereich von 10% bis 60% Restfeuchtigkeit liegen. Er beträgt vorzugsweise weniger als 20%, jedoch mehr als 5% Restfeuchtigkeit. D. h. die Kontakt- und/oder Zwischenschicht wird vor dem Aufbringen der ersten bzw. zweiten Besandungsschicht vorteilhafterweise nicht vollständig getrocknet. Damit kann die Herstellung der Gussform weiter erheblich beschleunigt werden. - Es hat sich überraschenderweise gezeigt, dass das vorgeschlagene Beibehalten einer Restfeuchtigkeit ebenfalls zu Gussformen mit einer hervorragenden Festigkeit führt. Bei einer Herstellung der Gussform unter Beibehaltung der vorgeschlagenen Restfeuchtigkeit kann die Anzahl an Zwischenschichten und zweiten Besandungsschichten erheblich vermindert oder es kann auch auf das Vorsehen solcher Schichten verzichtet werden. Bei einer Herstellung der Gussform unter Beibehaltung der vorgeschlagenen Restfeuchtigkeit kann überraschenderweise eine so gute Festigkeit der Kontakt- und/oder Zwischenschicht erreicht werden, dass hier auch auf den Zusatz eines hydraulischen Bindemittels verzichtet werden kann. Insoweit wird ein Verfahren zur Herstellung einer Gussform unter Verwendung der Einstellung der vorgenannten Restfeuchtigkeit in der Kontakt- und/oder Zwischenschicht als eigenständige Erfindung angesehen. Bei einem solchen Verfahren kann zur Trocknung bzw. Einstellung der Restfeuchtigkeit auch Infrarotstrahlung verwendet werden.

Im Falle der Verwendung eines hydraulischen Bindemittels ist darauf zu achten, dass eine ausreichende Restfeuchtigkeit in der Schichtabfolge bzw. der Zwischenschichtabfolge zurückbleibt, damit das hydraulische Bindemittel vollständig abbinden kann. Der durch das Abbinden des hydraulischen Bindemittels verursachte Wasserverbrauch trägt zu einer Beschleunigung des Trocknungs- und Verfestigungsvorgangs der jeweiligen Schicht- bzw. Zwischenschichtabfolge sowie der Mantelschicht bei.

Eine Trocknungszeit bzw. eine Zeit zur Einstellung der Restfeuchtigkeit beträgt zweckmäßigerweise je Schicht- oder Zwischenschichtabfolge weniger als 25 Minuten, vorzugsweise 5 bis 15 Minuten.

Insbesondere im Hinblick auf die mechanische und chemische Stabilität der Gussform sowie deren effizienter Herstellung hat es sich als zweckmäßig erwiesen, dass der Anteil des hydraulischen Bindemittels in der ersten Trockenmasse kleiner als der in der zweiten oder dritten Trockenmasse ist. Der Anteil des hydraulischen Bindemittels in der zweiten und/oder dritten Trockenmasse ist vorteilhafterweise um zumindest 2 Gew.%, vorzugsweise um zumindest 5 Gew.%, höher als in der ersten Trockenmasse.

Des Weiteren hat es sich als zweckmäßig erwiesen, dass der erste und/oder zweite Schlicker eine Viskosität von höchstens 1000 mPas, vorzugsweise zwischen 450 und 750 mPas, aufweist/aufweisen. Schlicker mit einer derartigen Viskosität lassen sich besonders gut im Spritzverfahren verarbeiten.

Nach weiteren Ausgestaltungsmerkmalen des Verfahrens wird nach der Herstellung der Mantelschicht der Formkern durch Schmelzen oder Ausbrennen des den Formkern bildenden Materials entfernt. Bei dem Material handelt es sich zweckmäßigerweise um Wachs oder dergleichen. Das Schmelzen des den Formkern bildenden Materials und/oder eine zusätzliche Trocknung der Schicht- und/oder Zwischenschichtabfolge kann auch mittels Mikrowellen erfolgen.

Ein nach dem Entfernen des Formkerns gebildeter Grünkörper wird zweckmäßigerweise bei einer Sintertemperatur von mehr als 800°C und weniger als 1200°C gesintert. Die erfindungsgemäß vorgeschlagene Verwendung eines hydraulischen Bindemittels zur Herstellung der Gussform trägt im Vergleich zu nach dem Stand der Technik bekannten Verfahren zu einer erheblich Reduzierung der Sintertemperatur bei.

Nachfolgend werden Ausführungsbeispiele der Erfindung näher erläutert.

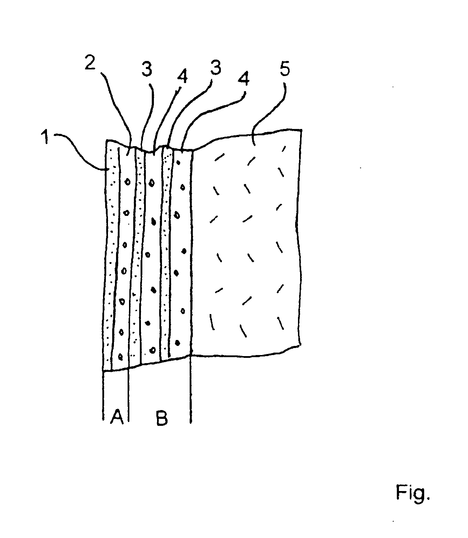

Die einzige Figur zeigt schematisch eine Teilquerschnittsansicht durch eine erfindungsgemäße Gussform. Eine Kontaktschicht 1 enthält beispielsweise 85 Gew.% Y₂O₃ und 15 Gew.% von Hydratationsprodukten des Calziumaluminatzements. Mit dem Bezugszeichen 2 ist eine erste Besandungsschicht bezeichnet, die im Wesentlichen aus einem weiteren Y₂O₃-Pulver mit einer mittleren Korngröße von etwa 150 µm besteht. Die Kontaktschicht 1 und die erste Besandungsschicht 2 bilden eine Schichtabfolge A.

Auf die erste Besandungsschicht 2 ist eine Zwischenschicht 3 aufgebracht, die als wesentlichen Bestandteil MgO enthält, welches wiederum mit dem Reaktionsprodukt eines Calciumaluminatzements abgebunden ist. Mit dem Bezugszeichen 4 ist eine zweite Besandungsschicht bezeichnet, welche aus einem MgO-Pulver hergestellt ist. Eine abwechselnd aus der Zwischenschicht 3 und der zweiten Besandungsschicht 4 gebildete Zwischenschichtabfolge ist mit dem Bezugszeichen B bezeichnet. Die Zwischenschichtabfolge B ist mit einer Mantelschicht 5 hinterfüttert, welche als wesentlichen festen Bestandteil MgO enthält, das wiederum mittels eines hydraulischen Bindemittels, vorzugsweise Calciumaluminatzement, abgebunden ist.

Die Schichtabfolge A kann - ähnlich wie die Zwischenschichtabfolge B - auch aus einer Abfolge mehrerer abwechselnd aufeinanderfolgender Kontaktschichten 1 sowie erster Besandungsschichten 2 gebildet sein.

### Beispiel 1:

Zur Herstellung der Kontaktschicht 1 wird zunächst ein erster Schlicker hergestellt, dessen erste Trockenmasse 80 bis 90 Gew.% eines ersten Y₂O₃-Pulvers enthält. Die mittlere Korngröße d₅₀ des ersten Y₂O₃-Pulvers beträgt zweckmäßigerweise 10 bis 15 µm. Der Modalwert beträgt vorteilhafterweise 15 bis 25 µm. Das Kornband liegt zweckmäßigerweise im Bereich zwischen 0 bis 50 µm. Ferner enthält die erste Trockenmasse zweckmäßigerweise 10 bis 20 Gew.% eines Calciumaluminatzements. Durch Zusatz einer geeigneten Menge an Wasser wird ein erster Schlicker mit einer Viskosität im Bereich von 400 bis 700 mPas hergestellt. Der erste Schlicker wird im Spritzverfahren auf einen, beispielsweise aus Wachs hergestellten, Formkern aufgespritzt. Sodann wird die aus dem ersten Schlicker hergestellte Kontaktschicht 1 mit einer ersten Besandungsschicht 2 besandet. Die erste Besandungsschicht 2 besteht dabei im Wesentlichen aus einem zweiten Y₂O₃-Pulver, welches eine mittlere Korngröße im Bereich von 170 bis 200 µm aufweist. Die so hergestellte Schichtabfolge A wird dann z. B. unter IR-Einwirkung für eine Zeit von etwa 10 bis 20 Minuten, vorzugsweise bis auf eine Restfeuchtigkeit von 10 bis 30 %, getrocknet.

Der vorerwähnte Vorgang der Herstellung der Kontaktschicht 1 sowie der ersten Besandungsschicht 2 kann mehrfach, beispielsweise drei- bis fünfmal, wiederholt werden. Die Schichtabfolge A kann anstelle der ersten Besandungsschicht 2 auch durch eine Kontaktschicht 1 abgeschlossen werden. Es kann auch sein, dass eine die Schichtabfolge A abschließende erste Besandungsschicht im Wesentlichen aus einem MgO-Pulver hergestellt wird. Dieses MgO-Pulver kann hinsichtlich seiner Korngrößenverteilung sowie seiner mittleren Korngröße entsprechend dem zweiten Y₂O₃-Pulver ausgeführt sein.

Zur Herstellung einer oder mehrerer Zwischenschichten 3 der Zwischenschichtabfolge B wird ein zweiter Schlicker herstellt. Eine zweite Trockenmasse zur Herstellung des zweiten Schlickers enthält beispielsweise 65 bis 80 Gew.%, vorzugsweise 65 bis 70 Gew.%, MgO sowie 20 bis 35 Gew.%, vorzugsweise 30 bis 35 Gew.%, eines Calciumaluminatzements. Durch Zusatz einer geeigneten Menge an Wasser wird ein zweiter Schlicker hergestellt, dessen Viskosität zweckmäßigerweise so eingestellt ist, dass damit eine Beschichtung im herkömmlichen Tauchverfahren möglich ist. Zur Herstellung der Zwischenschicht 3 wird die auf den Formkern aufgebrachte Schichtabfolge A im Tauchverfahren mit dem zweiten Schlicker beschichtet. Danach wird die zweite Besandungsschicht 4 aufgetragen, die im Wesentlichen aus einem MgO-Pulver mit einer Korngröße im Bereich von 0,1 bis 2,0 mm gebildet ist. Nach dem Herstellen der zweiten Besandungsschicht 4 wird die so gebildete Zwischenschichtabfolge B zweckmäßigerweise für eine Dauer von 15 bis 20 Minuten unter IR-Einwirkung getrocknet. Auch dabei kann in der Zwischenschichtabfolge B eine Restfeuchtigkeit im Bereich von 10 bis 30 % eingestellt werden. Anschließend können in der gleichen Weise weitere Zwischen- 3 und zweite Besandungsschichten 4 aufgebracht werden. Die Zwischenschichtabfolge B kann abschließend für eine Zeitdauer von 10 bis 25 Minuten unter IR-Einwirkung getrocknet werden.

Zur Herstellung der Mantelschicht 5 wird aus 60 bis 80 Gew.%, vorzugsweise 70 bis 80 Gew.%, MgO, 20 bis 40 Gew.%, vorzugsweise 20 bis 30 Gew.%, Calciumaluminatzement sowie Wasser und Hilfsstoffen eine noch fließfähige Masse hergestellt. Der beschichtete Formkern wird dann in eine Form gestellt und mit der fließfähigen Masse umgossen. Nach dem vorzugsweise unter IR-Einwirkung erfolgten Trocknen der Masse wird der Formkern durch Temperaturerhöhung entfernt. Anschließend wird der so hergestellte Grünling bei einer Temperatur im Bereich von 1000 bis 1200°C, vorzugsweise im Bereich zwischen 1100 und 1200°C, gesintert.

### Beispiel 2:

Eine erste Trockenmasse zur Herstellung des ersten Schlickers enthält in diesem Fall 60 bis 70 Gew.% Y₂O₃ und 10 bis 20 Gew.% CeO₂, das Kornband der Mischung liegt zwischen 0 bis 50 µm. Ferner enthält die erste Trockenmasse 10 bis 20 Gew.% des Calciumaluminatzements. Die erste Trockenmasse wird mit Wasser gemischt, so dass ein erster Schlicker mit einer Viskosität im Bereich von 300 bis 600 mPas entsteht.

Im Übrigen wird das Verfahren wie im Beispiel 1 erläutert durchgeführt.

Die Trocknung der Schichtabfolge A und/oder der Zwischenschichtabfolge B kann mittels IR-Strahlung unterstützt werden. Der beschichtete Formkern kann, vorzugsweise zusätzlich, durch eine Trockenkammer geführt werden, in der eine Lufttemperatur im Bereich von 30 bis 60°C herrscht.

Der erste und/oder zweite Schlicker kann/können außer den vorerwähnten Bestandteilen auch noch herkömmliche Hilfsstoffe, insbesondere die organischen Hilfsstoffe, in üblichen Mengen enthalten.

## Patentansprüche

1. Verfahren zur Herstellung einer Gussform zum Vergießen von Metallschmelzen, insbesondere zum Vergießen von Titan, Titanlegierungen oder intermetallischen Titanaluminiden, mit folgenden Schritten:
Herstellen einer Kontaktschicht durch Aufbringen eines ein erstes Metalloxid-Pulver als einen wesentlichen festen Bestandteil enthaltenden ersten Schlickers auf einen Formkern,
Herstellen einer ersten Besandungsschicht auf der aus dem ersten Schlicker gebildeten Kontaktschicht durch Besanden mit einem zweiten Metalloxid-Pulver,
Bestrahlen der aus der Kontaktschicht und der ersten Besandungsschicht gebildeten Schichtabfolge mit Infrarotlicht für eine vorgegebene Zeit,
**dadurch gekennzeichnet, dass**
eine erste Trockenmasse des ersten Schlickers ein hydraulisches Bindemittel enthält.

2. Verfahren nach Anspruch 1, wobei die erste Trockenmasse 1 bis 30 Gew.%, vorzugsweise 8 bis 17 Gew.%, des hydraulischen Bindemittels enthält.

3. Verfahren nach einem der vorhergehenden Ansprüche, wobei das hydraulische Bindemittel ein Calciumaluminatzement ist.

4. Verfahren nach einem der vorhergehenden Ansprüche, wobei ein Kornband des ersten Metalloxid-Pulvers einen Bereich von 0 bis 50 µm und vorteilhafterweise eine mittlere Korngröße (d₅₀) im Bereich von 8 bis 20 µm aufweist.

5. Verfahren nach einem der vorhergehenden Ansprüche, wobei das zweite Metalloxid-Pulver eine mittlere Korngröße im Bereich von 130 bis 200 µm aufweist.

6. Verfahren nach einem der vorhergehenden Ansprüche, wobei das erste und/oder zweite Metalloxid-Pulver aus zumindest einem Metalloxid gebildet ist, welches aus der folgenden Gruppe ausgewählt ist: Y₂O₃, CeO, MgO, Al₂O₃.

7. Verfahren nach einem der vorhergehenden Ansprüche, wobei die erste Trockenmasse weniger als 90 Gew.% an erstem Metalloxid-Pulver enthält.

8. Verfahren nach einem der vorhergehenden Ansprüche, wobei eine eine Schichtabfolge aus Kontakt- und erster Besandungsschicht umgebende Mantelschicht hergestellt wird.

9. Verfahren nach einem der vorhergehenden Ansprüche, wobei die Mantelschicht als wesentlichen Bestandteil MgO enthält.

10. Verfahren nach einem der vorhergehenden Ansprüche, wobei eine zweite Trockenmasse zur Herstellung der Mantelschicht ein hydraulisches Bindemittel, vorzugsweise einen Calciumaluminatzement, enthält.

11. Verfahren nach einem der vorhergehenden Ansprüche, wobei eine zweite Trockenmasse zumindest 40 Gew.% MgO sowie zumindest 20 Gew.% des hydraulischen Bindemittels enthält.

12. Verfahren nach einem der vorhergehenden Ansprüche, wobei die zweite Trockenmasse zumindest 1 Gew.% eines oder mehrerer der folgenden Oxide enthält: Fe₂O₃, SiO₂, CaO, Al₂O₃.

13. Verfahren nach einem der vorhergehenden Ansprüche, wobei vor der Herstellung der Mantelschicht auf die aus Kontakt- und erster Besandungsschicht gebildete Schichtabfolge eine aus einer Zwischen- und einer zweiten Besandungsschicht gebildete Zwischenschichtabfolge aufgebracht wird.

14. Verfahren nach einem der vorhergehenden Ansprüche, wobei die Kontakt- und/oder die Zwischenschicht im Spritzverfahren aufgebracht wird.

15. Verfahren nach einem der vorhergehenden Ansprüche, wobei ein zweite Schlicker ein erstes MgO-Pulver als wesentlichen festen Bestandteil enthält.

16. Verfahren nach einem der vorhergehenden Ansprüche, wobei der zweite Schlicker ein hydraulisches Bindemittel, vorzugsweise einen Calciumaluminatzement, enthält.

17. Verfahren nach einem der vorhergehenden Ansprüche, wobei eine dritte Trockenmasse zur Herstellung des zweiten Schlickers zumindest 50 Gew.% MgO und zumindest 20 Gew.% des hydraulischen Bindemittels enthält.

18. Verfahren nach einem der vorhergehenden Ansprüche, wobei die zweite Besandungsschicht durch Aufbringen eines zweiten MgO-Pulvers auf die Zwischenschicht hergestellt wird.

19. Verfahren nach einem der vorhergehenden Ansprüche, wobei die erste und/oder dritte Trockenmasse und/oder die Besandungsschicht/en zumindest 1 Gew.% eines der folgenden Oxide enthält/enthalten: CeO₂, La₂O₃, Gd₂O₃, Nd₂O₃, TiO₂.

20. Verfahren nach einem der vorhergehenden Ansprüche, wobei ein Feuchtigkeitsgehalt der Schicht- und/oder der Zwischenschichtabfolge nach deren Herstellung auf einen vorgegebenen Wert vermindert wird.

21. Verfahren nach einem der vorhergehenden Ansprüche, wobei der vorgegebene Wert im Bereich von 10 bis 60% Restfeuchtigkeit liegt, vorzugsweise weniger als 20% Restfeuchtigkeit, beträgt.

22. Verfahren nach einem der vorhergehenden Ansprüche, wobei eine Trockenzeit je Schicht- oder Zwischenschichtabfolge weniger als 25 Minuten, vorzugsweise 5 bis 15 Minuten, beträgt.

23. Verfahren nach einem der vorhergehenden Ansprüche, wobei der Anteil des hydraulischen Bindemittels in der ersten Trockenmasse kleiner ist als in der zweiten oder dritten Trockenmasse.

24. Verfahren nach einem der vorhergehenden Ansprüche, wobei der Anteil des hydraulischen Bindemittels in der zweiten und/oder dritten Trockenmasse um zumindest 2 Gew.%, vorzugsweise um zumindest 5 Gew.%, höher ist als in der ersten Trockenmasse.

25. Verfahren nach einem der vorhergehenden Ansprüche, wobei der erste und/oder zweite Schlicker eine Viskosität von höchstens 1000 mPas, vorzugsweise zwischen 450 und 750 mPas, aufweist/aufweisen.

26. Verfahren nach einem der vorhergehenden Ansprüche, wobei nach der Herstellung der Mantelschicht der Formkern durch Schmelzen oder Ausbrennen des den Formkern bildenden Materials entfernt wird.

27. Verfahren nach einem der vorhergehenden Ansprüche, wobei das Schmelzen des den Formkern bildenden Materials und/oder eine zusätzliche Trocknung der Schicht- und/oder der Zwischenschichtabfolge mittels Mikrowellen erfolgt.

28. Verfahren nach einem der vorhergehenden Ansprüche, wobei ein nach Entfernen des Formkerns gebildeter Grünkörper bei einer Sintertemperatur von mehr als 800 °C und weniger als 1200°C gesintert wird.

## Claims

1. Method for making a mold for casting metallic melts, in particular for casting titanium, titanium alloys or intermetallic titanium aluminides, with the following steps:
making a contact layer by applying a first slicker onto a mold core, which first slicker contains a first metal oxide powder as an essential solid component,
making a first sanding layer on the contact layer formed from the first slicker by sanding with a second metal oxide powder,
irradiating the layer sequence formed from the contact layer and the first sanding layer with infrared light for a specified period of time,
**characterized in that**
a first dry mass of the first slicker contains a hydraulic binder.

2. Method as defined in claim 1, wherein the first dry mass contains 1 to 30 wt.%, preferably 8 to 17 wt.%, of the hydraulic binder.

3. Method as defined in one of the preceding claims, wherein the hydraulic binder is a calcium aluminate cement.

4. Method as defined in one of the preceding claims, wherein a grain band of the first metal oxide powder has a range from 0 to 50 µm and advantageously a medium grain size (d₅₀) in the range from 8 to 20 µm.

5. Method as defined in one of the preceding claims, wherein the second metal oxide powder has a medium grain size in the range from 130 to 200 µm.

6. Method as defined in one of the preceding claims, wherein the first and/or second metal oxide powder is formed from at least one metal oxide which is selected from the following group: Y₂O₃, CeO, MgO, Al₂O₃.

7. Method as defined in one of the preceding claims, wherein the first dry mass contains less than 90 wt.% of the first metal oxide powder.

8. Method as defined in one of the preceding claims, wherein a coating layer surrounding a layer sequence of contact and first sanding layer is made.

9. Method as defined in one of the preceding claims, wherein the coating layer contains MgO as the essential component.

10. Method as defined in one of the preceding claims, wherein a second dry mass for making the coating layer contains a hydraulic binder, preferably a calcium aluminate cement.

11. Method as defined in one of the preceding claims, wherein a second dry mass contains at least 40 wt.% MgO as well as at least 20 wt.% of the hydraulic binder.

12. Method as defined in one of the preceding claims, wherein the second dry mass contains at least 1 wt.% of one or more of the following oxides: Fe₂O₃, SiO₂, CaO, Al₂O₃.

13. Method as defined in one of the preceding claims, wherein before making the coating layer, an intermediate layer sequence formed from an intermediate layer and a second sanding layer is applied onto the layer sequence formed from a contact and first sanding layer.

14. Method as defined in one of the preceding claims, wherein the contact and/or the intermediate layer are applied using the injection method.

15. Method as defined in one of the preceding claims, wherein a second slicker contains a first MgO powder as the essential solid component.

16. Method as defined in one of the preceding claims, wherein the second slicker contains a hydraulic binder, preferable a calcium aluminate cement.

17. Method as defined in one of the preceding claims, wherein a third dry mass for making the second slicker contains at least 50 wt.% of MgO and at least 20 wt.% of the hydraulic binder.

18. Method as defined in one of the preceding claims, wherein the second sanding layer is made by applying a second MgO powder onto the intermediate layer.

19. Method as defined in one of the preceding claims, wherein the first and/or third dry mass and/or the sanding layer/layers contains/contain at least 1 wt.% of one of the following oxides: CeO₂, La₂O₃, Gd₂O₃, Nd₂O₃, TiO₂.

20. Method as defined in one of the preceding claims, wherein a moisture content of the layer sequence and/or the intermediate layer sequence is reduced to a specified value after they are made.

21. Method as defined in one of the preceding claims, wherein the specified value is in the range from 10 to 60% residual moisture, preferably less than 20% residual moisture.

22. Method as defined in one of the preceding claims, wherein a drying time per layer sequence or intermediate layer sequence is less than 25 minutes, preferably 5 to 15 minutes.

23. Method as defined in one of the preceding claims, wherein the fraction of the hydraulic binder in the first dry mass is less than in the second or third dry mass.

24. Method as defined in one of the preceding claims, wherein the fraction of the hydraulic binder in the second and/or third dry mass is greater than in the first dry mass by at least 2 wt.%, preferable by at least 5 wt.%.

25. Method as defined in one of the preceding claims, wherein the first and/or second slicker has/have a viscosity of not more than 1000 mPas, preferably between 450 and 750 mPas.

26. Method as defined in one of the preceding claims, wherein, after making the coating layer, the mold core is removed by melting or burning out the material forming the mold core.

27. Method as defined in one of the preceding claims, wherein melting the material forming the mold core and/or an additional drying of the layer sequence and/or intermediate layer sequence is performed using microwaves.

28. Method as defined in one of the preceding claims, wherein a green body formed after the removal of the mold core is sintered at a sintering temperature of more than 800°C and less than 1200°C.

## Revendications

1. Procédé de fabrication d'un moule pour couler des métaux en fusion, en particulier pour couler du titane, des alliages de titane ou des aluminures de titane intermétalliques, selon les étapes suivantes:
réalisation d'une couche de contact par application d'une première barbotine contenant une première poudre d'oxyde métallique comme composant solide principal sur un noyau de moule,
réalisation d'une première couche de sablage sur la couche de contact formée à partir de la première barbotine par sablage avec une deuxième poudre d'oxyde métallique,
irradiation de la succession de couches formée à partir de la couche de contact et de la première couche de sablage par lumière infrarouge pour une durée prédéfinie,
**caractérisé en ce qu'**
une première masse sèche de la première barbotine contient un liant hydraulique.

2. Procédé selon la revendication 1, où la première masse sèche contient 1 à 30% en poids, de préférence 8 à 17% en poids, du liant hydraulique.

3. Procédé selon l'une des revendications précédentes, où le liant hydraulique est un ciment d'aluminate de calcium.

4. Procédé selon l'une des revendications précédentes, où une répartition de la taille des grains de la première poudre d'oxyde métallique présente une plage comprise entre 0 et 50 µm et, de préférence, une taille de grains moyenne (d₅₀) dans une plage comprise entre 8 et 20 µm.

5. Procédé selon l'une des revendications précédentes, où la deuxième poudre d'oxyde métallique présente une taille de grains moyenne dans une plage comprise entre 130 et 200 µm.

6. Procédé selon l'une des revendications précédentes, où la première et/ou la deuxième poudre d'oxyde métallique est formée à partir d'au moins un oxyde métallique qui est sélectionné à partir du groupe suivant : Y₂O₃, CeO, MgO, Al₂O₃.

7. Procédé selon l'une des revendications précédentes, où la première masse sèche continent moins de 90% en poids de première poudre d'oxyde métallique.

8. Procédé selon l'une des revendications précédentes, où une couche d'enveloppe entourant une succession de couches formée à partir d'une couche de contact et d'une première couche de sablage est réalisée.

9. Procédé selon l'une des revendications précédentes, où la couche d'enveloppe contient du MgO comme composant principal.

10. Procédé selon l'une des revendications précédentes, où une deuxième masse sèche pour la réalisation de la couche d'enveloppe contient un liant hydraulique, de préférence un ciment d'aluminate de calcium.

11. Procédé selon l'une des revendications précédentes, où une deuxième masse sèche contient au moins 40% en poids de MgO ainsi qu'au moins 20% en poids du liant hydraulique.

12. Procédé selon l'une des revendications précédentes, où la deuxième masse sèche contient au moins 1% en poids d'un ou de plusieurs des oxydes suivants : Fe₂O₃, SiO₂, CaO, Al₂O₃.

13. Procédé selon l'une des revendications précédentes, où avant la réalisation de la couche d'enveloppe sur la succession de couches formée à partir d'une couche de contact et d'une première couche de sablage est appliquée une succession de couches intermédiaires formée à partir d'une couche intermédiaire et d'une deuxième couche de sablage.

14. Procédé selon l'une des revendications précédentes, où la couche de contact et/ou la couche intermédiaire est appliquée par injection.

15. Procédé selon l'une des revendications précédentes, où une deuxième barbotine contient une première poudre MgO comme composant solide principal.

16. Procédé selon l'une des revendications précédentes, où la deuxième barbotine contient un liant hydraulique, de préférence un ciment d'aluminate de calcium.

17. Procédé selon l'une des revendications précédentes, où une troisième masse sèche pour la réalisation de la deuxième barbotine contient au moins 50% en poids de MgO et au moins 20% en poids du liant hydraulique.

18. Procécé selon l'une des revendications précédentes, où la deuxième couche de sablage est réalisée par application d'une deuxième poudre MgO sur la couche intermédiaire.

19. Procédé selon l'une des revendications précédentes, où la première et/ou troisième masse sèche et/ou la/les couche(s) de sablage contient/contiennent au moins 1% en poids d'un des oxydes suivants : CeO₂, La₂O₃, Gd₂O₃, Nd₂O₃, TiO₂.

20. Procédé selon l'une des revendications précédentes, où un taux d'humidité de la succession de couches et/ou de couches intermédiaires est réduit à une valeur prédéfinie après sa réalisation.

21. Procédé selon l'une des revendications précédentes, où la valeur prédéfinie est comprise dans une plage de 10 à 60% d'humidité résiduelle, de préférence étant inférieure à 20% d'humidité résiduelle.

22. Procédé selon l'une des revendications précédentes, où un temps de séchage par succession de couches ou de couches intermédiaires est inférieur à 25 minutes, de préférence de 5 à 15 minutes.

23. Procédé selon l'une des revendications précédentes, où la proportion du liant hydraulique dans la première masse sèche est inférieure à celle dans la deuxième ou troisième masse sèche.

24. Procédé selon l'une des revendications précédentes, où la proportion du liant hydraulique dans la deuxième et/ou la troisième masse sèche est supérieure d'au moins 2% en poids, de préférence d'au moins 5% en poids, à celle dans la première masse sèche.

25. Procédé selon l'une des revendications précédentes, où la première et/ou la deuxième barbotine présente/présentent une viscosité de maximum 1000 mPas, de préférence entre 450 et 750 mPas.

26. Procédé selon l'une des revendications précédentes, où après réalisation de la couche d'enveloppe le noyau de moule est retiré par fusion ou combustion du matériau formant le noyau de moule.

27. Procédé selon l'une des revendications précédentes, où la fusion du matériau formant le noyau de moule et/ou un séchage supplémentaire de la succession de couches et/ou de couches intermédiaires s'effectue au moyen de micro-ondes.

28. Procédé selon l'une des revendications précédentes, où un corps vert formé après retrait du noyau de moule est fritté à une température de frittage supérieure à 800 °C et inférieure à 1200 °C.
